Europäisches Patentamt

(19) European Patent Office

Office européen des brevets

(11) Numéro de publication: **0 082 972**
**B1**

(12) **FASCICULE DE BREVET EUROPEEN**

(45) Date de publication du fascicule du brevet:
**02.05.85**

(51) Int. Cl.⁴: **F 24 C 7/04,** A 47 J 37/06

(21) Numéro de dépôt: **82111077.2**

(22) Date de dépôt: **01.12.82**

(54) **Appareil électrique de cuisson, tel qu'un four ménager.**

(30) Priorité: **02.12.81 FR 8122553**

(43) Date de publication de la demande:
**06.07.83 Bulletin 83/27**

(45) Mention de la délivrance du brevet:
**02.05.85 Bulletin 85/18**

(84) Etats contractants désignés:
**AT BE CH DE GB IT LI NL**

(56) Documents cités:
**DE - A - 2 019 038**
**DE - C - 805 291**
**FR - A - 1 431 830**

(73) Titulaire: **MOULINEX S.A., 7 à 15, rue Jules-Ferry,**
**F-93171 Bagnolet (FR)**

(72) Inventeur: **Weiss, Roger, 28, Montpichet-Bouleurs,**
**F-77580 Crecy-La-Chapelle (FR)**

(74) Mandataire: **May, Hans Ulrich, Thierschstrasse 27,**
**D-8000 München 22 (DE)**

## Description

L'invention se rapporte aux appareils électriques de cuisson tels que les fours à usage ménager.

L'invention concerne, plus précisément, les appareils de cuisson dits à double paroi, qui comportent, d'une part, un moufle de cuisson présentant la forme d'un parallélépipède ouvert sur sa face frontale et comprenant une paroi de fond verticale et une enceinte tubulaire à axe horizontal constituant les parois de voûte et de sole ainsi que les parois latérales du moufle et, d'autre part, une enveloppe externe présentant également une forme tubulaire et entourant ladite enceinte à quelque distance de celle-ci.

L'invention a notamment pour but de simplifier la fabrication de ces appareils.

Dans un appareil de cuisson selon l'invention, l'enceinte et l'enveloppe sont chacune formées de deux coquilles à section en U qui ont leur ouverture tournée l'une vers l'autre et qui sont assemblées l'une à l'autre selon leurs bords horizontaux adjacents.

Grâce à cette disposition, les parties constituant le moufle et l'enveloppe externe, c'est-à-dire la carrosserie de l'appareil, sont seulement au nombre de cinq, à savoir la paroi de fond, les deux coquilles internes formant l'enceinte, et les deux coquilles externes formant l'enveloppe, et ces parties peuvent être assemblées au moyen d'un nombre réduit d'organes d'assemblage.

Les caractéristiques et avantages de l'invention ressortiront d'ailleurs de la description qui va suivre, à titre d'exemple, en référence aux dessins annexés dans lesquels:

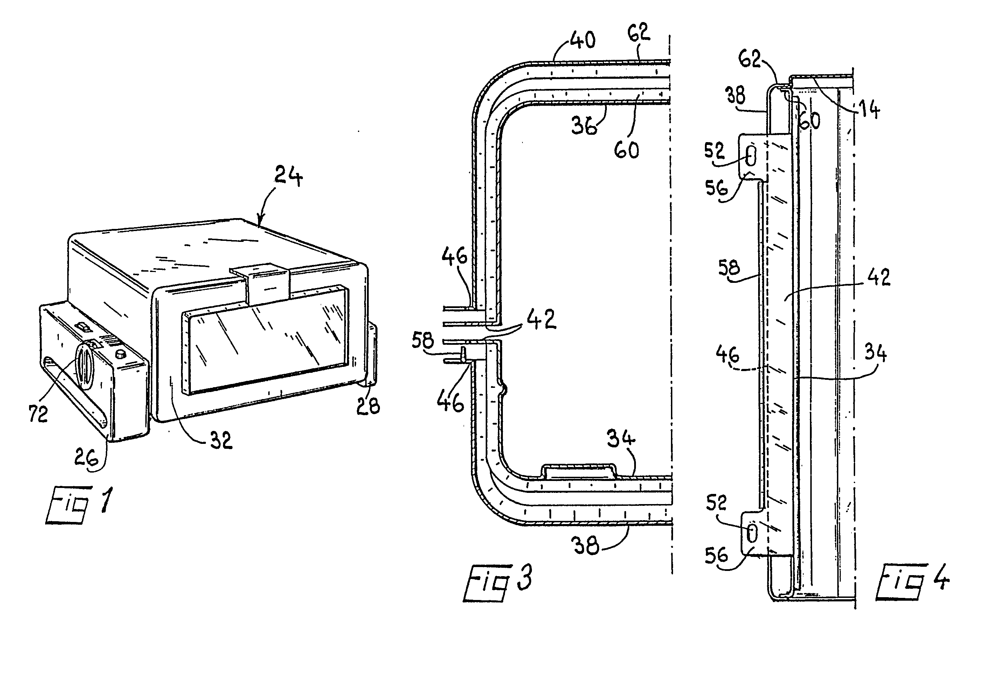

la fig. 1 est une vue en perspective d'un petit four ménager;

la fig. 2 représente, à plus grande échelle, une coupe longitudinale verticale de ce four;

la fig. 3 représente en coupe une vue éclatée des extrémités des coquilles de l'enceinte et de l'enveloppe situées d'un même côté du four;

la fig. 4 représente, partiellement en vue de dessus et partiellement en coupe horizontale, un côté des coquilles inférieures de l'enceinte et de l'enveloppe ainsi qu'une partie de la plaque de fond du moufle.

Le four ménager représenté comporte un moufle de cuisson 10 chauffé par une résistance électrique 12 et présentant la forme générale d'un parallélépipède ouvert sur sa face frontale et comprenant une paroi de fond verticale 14 et une enceinte tubulaire 16 à axe horizontal constituant les parois de voûte 18 et de sole 20 ainsi que les parois latérales 21 et 22 du moufle. Ce four comprend, en outre, une enveloppe externe 24 représentant également une forme tubulaire et entourant ladite enceinte 16 à quelque distance de celle-ci. La carrosserie ainsi constituée par le moufle 10 et l'enveloppe 24 est supportée par deux pieds isolants 26 et 28 qui lui sont fixés par des vis 30. Cette carrosserie est, de plus, équipée d'une porte 32 de fermeture du moufle 10.

Selon la présente invention, l'enceinte 16 et l'enveloppe 24 sont chacune fermées de deux coquilles à section en U qui ont leur ouverture tournée l'une vers l'autre et qui sont assemblées l'une à l'autre selon leurs bords horizontaux adjacents. Sur les dessins, ces coquilles en U sont désignées par les références 34 et 36 pour ce qui concerne l'enceinte 16, et par 38 et 40 pour ce qui concerne l'enveloppe 24.

Les bords horizontaux adjacents des coquilles 34 et 36 de l'enceinte sont désignées par 42 pour ce qui concerne la partie gauche de l'appareil, et par 44 pour ce qui concerne la partie droite. Les bords horizontaux adjacents des coquilles 38 et 40 de l'enveloppe sont désignés par 46 pour ce qui concerne la partie gauche, et par 48 pour ce qui concerne la partie droite.

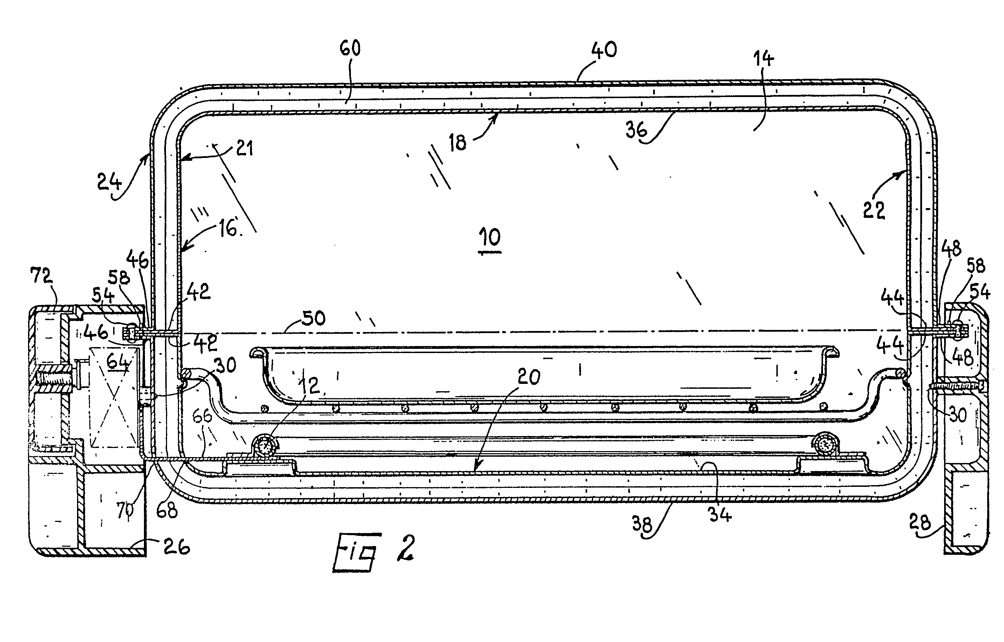

Les deux paires 42 et 44 de bords adjacents des coquilles de l'enceinte et les deux paires 46 et 48 de bords adjacents des coquilles de l'enveloppe sont toutes situées dans un même plan horizontal 50 (fig. 2). Comme on le voit bien sur la fig. 3, chacun de ces bords horizontaux est plié vers l'extérieur dans le plan horizontal pour former une ailette d'assemblage. Les quatre ailettes situées d'un même côté de l'appareil (42 et 46 à gauche, 44 et 48 à droite) sont superposées l'une à l'autre et sont percées de trous superposés (tels que 52 visibles sur la fig. 4) qui reçoivent des organes d'assemblage communs 54 (fig. 2).

Les trous 52 sont pratiqués dans deux pattes espacées 56 portées par chacune des ailettes d'assemblage 42, 44, 46, 48. La coquille inférieure 38 de l'enveloppe porte sur chaque côté, dans sa région médiane comprise entre les pattes 56, un rebord 58 dirigé vers le haut qui s'étend à l'extérieur des régions médianes des ailettes 42 (ou 44) portées par les deux coquilles 34 et 36 de l'enceinte, et également à l'extérieur de la région médiane de l'ailette 46 (ou 48) portée par la coquille supérieure 40 de l'enveloppe.

Comme on le voit sur la fig. 4, la paroi de fond 14 est emprisonnée entre l'enceinte 16 et l'enveloppe externe 24. A cet effet, chacune des coquilles 34 et 36 de l'enceinte porte une lèvre 60 disposée dans un plan vertical et dirigée vers l'extérieur, tandis que chacune des coquilles 38 et 40 de l'enveloppe porte une lèvre 62 disposée également dans un plan vertical mais dirigée vers l'intérieur, la paroi de fond 14 étant pincée entre ces lèvres 60 et 62.

Comme on le comprend, pour assembler les cinq pièces constituant la carrosserie du four, à savoir la paroi de fond 14, les coquilles 34 et 36 de l'enceinte et les coquilles 38 et 40 de l'enveloppe, on commence par poser sur un plan la coquille inférieure 38 de l'enveloppe, puis on y emboîte la coquille inférieure 34 de l'enceinte; cette coquille 34 vient d'elle-même se placer en position correcte dans la coquille 38 grâce au guidage assuré par les rebords 58 de la coquille 38 qui coopèrent avec les régions médianes des ailettes 42 et 44 de la coquille 34 et avec les pattes 56 portées par ces ailettes. On place alors la plaque de fond 14, en faisant glisser sa partie inférieure de haut en bas, entre les lèvres 60 et 62 des coquilles 34 et 38. Ensuite, on pose la coquille 36 contre la face antérieure de la plaque de fond 14, puis la coquille 40 dont la lèvre 62 vient border la face postérieure de la plaque de fond 14, les coquilles 36 et 40 prenant leur place correcte grâce encore aux rebords 58 de guidage. Il suffit alors de mettre en place les organes d'assemblage 54 dans les trous 52 pour terminer la constitution de la carrosserie.

L'un des pieds isolants 26 équipant cette carrosserie sert de support à un thermostat 64 de réglage de la température interne au moufle 10. La liaison thermique entre l'intérieur de ce moufle et ce thermostat 64 est assurée par une tige métallique 66 qui traverse horizontalement les parois de l'enceinte 16 et de l'enveloppe 24 par des lumières 68 et 70 de celles-ci, et dont les extrémités sont en relation thermique respectivement avec la résistance 12 et avec le thermostat 64. Ce thermostat est équipé d'un bouton de réglage 72 monté rotatif sur la face latérale du pied 26.

## Revendications

1. Appareil électrique de cuisson tel qu'un four ménager, comportant, d'une part, un moufle de cuisson (10) présentant la forme d'un parallélépipède ouvert sur sa face frontale et comprenant une paroi de fond verticale (14) et une enceinte tubulaire à axe horizontal (16) constituant les parois de voûte (18) et de sole (20) ainsi que les parois latérales (21 et 22) du moufle (10) et, d'autre part, une enveloppe externe (24) présentant également une forme tubulaire et entourant ladite enceinte (16) à quelque distance de celle-ci, caractérisé en ce que l'enceinte (16) et l'enveloppe (24) sont chacune formée de deux coquilles à section en U (34 et 36, et 38 et 40 respectivement) qui ont leur ouverture tournée l'une vers l'autre et qui sont assemblées l'une à l'autre selon leurs bords horizontaux adjacents (42 et 44, et 46 et 48 respectivement).

2. Appareil de cuisson selon la revendication 1, caractérisé en ce que les deux paries (42, 44) de bords horizontaux adjacents des coquilles (34, 36) de l'enceinte (16) et les deux paires (46, 48) de bords horizontaux adjacents des coquilles (38, 40) de l'enveloppe (24) sont situées dans un même plan horizontal (50).

3. Appareil de cuisson selon la revendication 2, caractérisé en ce que chacun desdits bords horizontaux (42, 44, 46, 48) est plié vers l'extérieur dans ledit plan horizontal (50) pour former une ailette d'assemblage, et les quatre ailettes d'assemblage situées d'un même côté de l'appareil sont superposées l'une à l'autre et sont percées de trous (52) superposés recevant des organes d'assemblage communs (54).

4. Appareil selon la revendication 3, caractérisé en ce que, les trous (52) étant pratiqués dans deux pattes espacées (56) portées par chacune des ailettes (42, 44, 46, 48), la coquille inférieure (38) de l'enveloppe porte sur chaque côté, dans sa région médiane comprise entre les pattes (56), un rebord (58) dirigé vers le haut qui s'étend à l'extérieur des régions médianes des ailettes (42, 44) portées par les deux coquilles (34 et 36) de l'enceinte et également à l'extérieur de la région médiane de l'ailette (46, 48) de la coquille supérieure (40) de l'enveloppe.

5. Appareil selon l'une des revendications précédentes, caractérisé en ce que, la carrosserie constituée par le moufle (10) et l'enveloppe (24) étant munie de deux pieds isolants (26 et 28) dont l'un (26) sert de support à un thermostat (64) de réglage de la température interne au moufle (10), la liaison thermique entre l'intérieur du moufle (10) et le thermostat (64) est assurée par une tige métallique (66) qui traverse horizontalement les parois de l'enceinte (16) et de l'enveloppe (24) à travers des lumières (68 et 70) de celles-ci, et dont les extrémités sont en relation thermique respectivement avec la résistance (12) de chauffage du moufle et avec le thermostat (64).

6. Appareil selon l'une quelconque des revendications précédentes, caractérisé en ce que la paroi de fond (14) est pincée entre l'enceinte (16) et l'enveloppe externe (24).

7. Appareil selon la revendication 6, caractérisé en ce que, chacune des coquilles (34, 36, 38, 40) portant sur son bord postérieur une lèvre périphérique (60, 62) disposée dans un plan vertical, la paroi du fond (14) est pincée entre les lèvres (60) des coquilles (34, 36) de l'enceinte (16) et les lèvres (62) des coquilles (38, 40) de l'enveloppe (24).

8. Appareil selon la revendication 7, caractérisé en ce que les lèvres (60) des coquilles (34, 36) de l'enceinte (16) sont dirigées vers l'extérieur tandis que les lèvres (62) des coquilles (38, 40) de l'enveloppe (24) sont dirigées vers l'intérieur.

## Patentansprüche

1. Elektrisches Kochgerät, wie ein Haushaltsbackofen, das einerseits eine Backmuffel (10) in Form eines an seiner Vorderseite offenen Prismas mit einer senkrechten Rückwand (14) und einer rohrförmigen Kammer (16) mit waagerechter Achse, welche die Dachwand (18), Bodenwand (20) sowie die Seitenwände (21 und 22) der Muffel (10) bildet, und andererseits einen ebenfalls rohrförmigen und die Kammer (16) in einigem Abstand von dieser umgebenden Aussenmantel (24) aufweist, dadurch gekennzeichnet, dass die Kammer (16) und der Mantel (24) jeder aus zwei Schalen mit U-Querschnitt (34 und 36 bzw. 38 und 40) gebildet sind, die mit ihrer Öffnung einander zugewandt und längs ihrer benachbarten waagerechten Ränder (42 und 44 bzw. 46 und 48) miteinander zusammengesetzt sind.

2. Kochgerät nach Anspruch 1, dadurch gekennzeichnet, dass die zwei Paare (42, 44) von waagerechten benachbarten Rändern (34, 36) der Kammer (16) und die zwei Paare (46, 48) der benachbarten waagerechten Ränder der Schalen (38, 40) des Mantels (24) in ein und derselben waagerechten Ebene (50) liegen.

3. Kochgerät nach Anspruch 2, dadurch gekennzeichnet, dass jeder der waagerechten Ränder (42, 44, 46, 48) in der waagerechten Ebene (50) nach aussen gebogen ist, um einen Montageflügel zu bilden, und dass die auf der gleichen Seite des Gerätes liegenden vier Montageflügel übereinanderliegen und übereinanderliegende Löcher (52) zur Aufnahme der gemeinsamen Verbindungselemente (54) aufweisen.

4. Gerät nach Anspruch 3, dadurch gekennzeichnet, dass die Löcher (52) in zwei von jedem der Flügel (42, 44, 46, 48) getragenen, in Abstand voneinander liegenden Füssen (56) ausgebildet sind, und dass die untere Schale (38) des Mantels an jeder Seite in ihrem zwischen den Füssen (56) liegenden Mittelbereich eine nach oben gerichtete Krempe (58) trägt, die sich ausserhalb er von den zwei Schalen (34 und 36) der Kammer getragenen Flügel (42, 44) und auch ausserhalb des Mittelbereichs des Flügels (46, 48) der oberen Schale (40) des Mantels erstreckt.

5. Gerät nach einem der vorangehenden Ansprüche, dadurch gekennzeichnet, dass das aus der Muffel (10) und dem Mantel (24) bestehende Gehäuse mit zwei Isolierfüssen (26 und 28) versehen ist, von denen der eine Fuss (26) als Halter eines Thermostats (64) zur Regelung der Temperatur innerhalb der Muffel (10) dient, wobei die Wärmeverbindung zwischen dem Inneren der Muffel (10) und dem Thermostaten (64) durch eine Metallstange (66) hergestellt wird, welche die Wände der Kammer (16) und des Mantels (24) durch in diesen ausgebildete Schlitze (68 und 70) waagerecht durchsetzt und deren Enden in Wärmeverbindung mit dem Heizwiderstand (12) der Muffel bzw. mit dem Thermostaten (64) sind.

6. Gerät nach einem der vorangehenden Ansprüche, dadurch gekennzeichnet, da die Rückwand (14) zwischen der kammer (16) und dem Aussenmantel (24) eingeklemmt ist.

7. Gerät nach Anspruch 6, dadurch gekennzeichnet, dass jede der Schalen (34, 36, 38, 40) an ihrem hinteren Rand eine in einer senkrechten Ebene angeordnete Umfangslippe (60, 62) trägt und die Rückwand (14) zwischen den Lippen (60) der Schalen (34, 36) der Kammer (16) und den Lippen (62) der Schalen (38, 40) des Mantels (24) eingeklemmt ist.

8. Gerät nach Anspruch 7, dadurch gekennzeichnet, dass die Lippen (60) der Schalen (34, 36) der Kammmer (16) nach aussen gerichtet, dagegen die Lippen (62) der Schalen (38, 40) des Mantels (24) nach innen gerichtet sind.

## Claims

1. An electric cooking device such as a domestic baking oven, comprising, on the one hand, a baking muffle (10) shaped like a prism open at the front and having a vertical rear wall (14) and a tubular chamber (16) with a horizontal axis defining the top wall (18), the bottom wall (20) and the sidewalls (21 and 22) of the muffle (10) and, on the other hand, a likewise tubular outer jacket (24) surrounding the chamber (16) in spaced relationship, characterized in that each of the chamber (16) and the jacket (24) is formed of two shells of U-cross-section (34, 36 and 38, 40, respectively) facing each other with their open sides and being joined to each other along their adjacent horizontal edges (42, 44 and 46, 48, respectively).

2. A cooking device as claimed in Claim 1, characterized in that the two pairs (42, 44) of horizontal adjacent edges (34, 36) of the chamber (16) and the two pairs (46, 48) of adjacent horizontal edges of the shells (38, 40) of the jacket (24) are disposed in the same horizontal plane (50).

3. A cooking device as claimed in Claim 2, characterized in that each of the horizontal edges (42, 44, 46, 48) is bent outwardly in the horizontal plane (50) to form a mounting wing, and that the four mounting wings provided on the same side of the device are stacked upon each other and are formed with superposed holes (52) for receiving the common connecting elements (54).

4. A cooking device as claimed in Claim 3, characterized in that the holes (52) are formed in feet (56) carried on each of the wings (42, 44, 46, 48) and spaced from each other, and that the bottom shell (38) of the jacket is provided on either side with an upwardly directed rim (58) in its central portion intermediate the feet (56), said rim extending externally of the wings (42, 44) carried by the two shells (34 and 36) of the chamber and also externally of the central portion of the wing (46, 48) of the top shell (40) of the jacket.

5. A cooking device as claimed in any of the preceding claims, characterized in that the casing consisting of the muffle (10) and the jacket (24) is provided with two insulating feet (26 and 28), one (26) of said feet funcitoning as holder for a thermostat (64) for regulating the temperature within the muffle (10), thermal communication between the interior of the muffle (10) and the thermostat (64) being established by means of a metal rod (66) horizontally extending through the walls of the chamber (16) and the jacket (24) via slots (68 and 70) formed therein, the ends of said rod being in thermal contact with the heating resistor (12) of the muffle and the thermostat (64), respectively.

6. A cooking device as claimed in any of the preceding claims, characterized in that the rear wall (14) is clamped between the chamber (16) and the outer jacket (24).

7. A cooking device as claimed in Claim 6, characterized in that each of the shells (34, 36, 38, 40) carries at its rear edge a peripheral lip (60, 62) disposed in a vertical plane, and the rear wall (14) is clamped between the lips (60) of the shells (34, 36) of the chamber (16) and the lips (62) of the shells (38, 40) of the jacket (24).

8. A cooking device as claimed in Claim 7, characterized in that the lips (60) of the shells (34, 36) of the chamber (16) are outwardly directed, whereas the lips (620 of the shells (38, 40) of the jacket (24) are inwardly directed.

Fig 4

Fig 3

Fig 1

Fig 2